(19) Europäisches Patentamt
European Patent Office
Office européen des brevets

(11) Veröffentlichungsnummer: **0 106 209**
**B1**

(12) # EUROPÄISCHE PATENTSCHRIFT

(45) Veröffentlichungstag der Patentschrift: **03.12.86**

(51) Int. Cl.⁴: **B 01 D 19/04**

(21) Anmeldenummer: **83109448.7**

(22) Anmeldetag: **22.09.83**

(54) **In Wasser leicht verteilbare Antischaummittel.**

(30) Priorität: **23.09.82 DE 3235256**

(43) Veröffentlichungstag der Anmeldung: **25.04.84 Patentblatt 84/17**

(45) Bekanntmachung des Hinweises auf die Patenterteilung: **03.12.86 Patentblatt 86/49**

(84) Benannte Vertragsstaaten: **BE DE FR GB IT NL**

(56) Entgegenhaltungen:
**EP-A- 0 036 597**
**EP-A- 0 049 834**
**DE-A- 3 102 826**
**GB-A- 1 385 026**
**US-A- 4 090 402**
**US-A- 4 110 539**

(73) Patentinhaber: **WACKER-CHEMIE GMBH**
**Prinzregentenstrasse 22**
**D-8000 München 22 (DE)**

(72) Erfinder: **Innertsberger, Ernst, Dipl.-Chem.**
**Mehringer Strasse 56**
**D-8263 Burghausen (DE)**
Erfinder: **Huber, Peter, Dr. Dipl.-Chem.**
**Gluckstrasse 39**
**D-8263 Burghausen (DE)**
Erfinder: **Schmidlkofer, Jakob**
**Ahornweg 3**
**D-8263 Mehring-Öd (DE)**
Erfinder: **Wimmer, Franz**
**Holzfelderweg 64**
**D-8263 Burghausen (DE)**

**EP 0 106 209 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

In Wasser verhältnismäßig leicht verteilbare Antischaummittel auf Grundlage von Organopolysiloxan, Füllstoff und Dispergiermittel sind bereits bekannt. Hierzu wird z. B. auf DE-A-29 03 423 (offengelegt 7. August 1980) verwiesen. Die erfindungsgemäßen Antischaummittel sind leichter in Wasser verteilbar als derartige bekannte Antischaummittel.

Gegenstand der Erfindung sind in Wasser leicht verteilbare Antischaummittel auf Grundlage von Organopolysiloxan, Füllstoff und Dispergiermittel, dadurch gekennzeichnet, daß in mindestens einem Teil des Organopolysiloxans zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, die Dispergiermittel mindestens zum Teil Tenside sind und diese Antischaummittel zusätzlich zu Organopolysiloxan, Füllstoff und Dispergiermittel als mindestens einen weiteren Stoff 2,2,4-Trimethyl-1,3-diisobutyryloxypentan enthalten.

Vorzugsweise ist das Organopolysiloxan der erfindungsgemäßen Antischaummittel aus Einheiten der Formel $R_2SiO$ und $R_2(R'O)SiO_{1/2}$ sowie gegebenenfalls mindestens einer der Einheiten der Formel $R_3SiO_{1/2}$, $RSiO_{3/2}$, $R(R'O)SiO$, $SiO_{4/2}$ und $R'OSiO_{3/2}$ aufgebaut.

In allen vorstehenden Formeln bedeutet R gleiche oder verschiedene, einwertige, gegebenenfalls substituierte Kohlenwasserstoffreste, die vorzugsweise 1 bis 18 Kohlenstoffatome je Rest aufweisen, und R' die aus Kohlenstoff- und Wasserstoffatomen oder aus Kohlenstoff-, Wasserstoff- und mindestens 2 Sauerstoffatomen je Rest sowie gegebenenfalls auch mindestens einem Si-Atom aufgebauten, SiOC-gebundenen Reste mit mindestens 6 Kohlenstoffatomen je Rest.

Beispiele für Kohlenwasserstoffreste R sind Alkylreste, wie der Methyl-, Ethyl-, n-Propyl-, Isopropyl-, n-Butyl- und sec.-Butylrest sowie Octadecylreste ; Alkenylreste, wie der Vinylrest ; Cycloalkylreste, wie der Cyclohexylrest und Methylcyclohexylreste ; Arylreste, wie der Phenylrest ; Aralkylreste, wie der 2-Phenylpropylrest und Alkarylreste, wie Tolylreste.

Beispiele für substituierte Kohlenwasserstoffreste R sind insbesondere halogenierte Kohlenwasserstoffreste, wie der 3,3,3-Trifluorpropylrest und o-, p- und m-Chlorphenylreste.

Insbesondere wegen der leichteren Zugänglichkeit sind vorzugsweise mindestens 80 % der Anzahl der SiC-gebundenen Reste in den Organopolysiloxanen der erfindungsgemäßen Antischaummittel Methylreste.

Vorzugsweise sind die aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebauten SiOC-gebundenen Reste mit jeweils mindestens 6 Kohlenstoffatomen je Rest einwertig. Sie können aber auch zweiwertig sein.

Vorzugsweise enthalten die SiOC-gebundenen, aus Kohlenstoff- und Wasserstoffatomen aufgebauten Reste mit mindestens 6 Kohlenstoffatomen je Rest höchstens 30 Kohlenstoffatome je Rest. Weiterhin ist bevorzugt, daß diese Reste Alkylreste sind, wie der n-Hexyl-, 2-Ethylhexyl-, Lauryl-, Isotridecyl- und 2-Octyldodecylrest, oder Cycloalkylreste sind, wie Methylcyclohexylreste. Diese Reste können aber auch z. B. aus Kohlenstoff- und Wasserstoffatomen aufgebaute Reste mit aliphatischer Mehrfachbindung, wie der Oleylrest ; Arylreste, wie der Phenylrest ; Aralkylreste, wie der Benzylrest ; oder Alkarylreste, wie Tolylreste, sein.

Vorzugsweise sind in den SiOC-gebundenen, aus Kohlenstoff-, Wasserstoff- und mindestens 2 Sauerstoffatomen je Rest sowie gegebenenfalls auch mindestens einem Si-Atom aufgebauten Resten mit mindestens 6 Kohlenstoffatomen je Rest mindestens 2 der Sauerstoffatome Ethersauerstoffatome. Weiterhin ist bevorzugt, daß diese Reste ein Molekulargewicht von 100 bis 20 000 besitzen.

Beispiele für SiOC-gebundene, aus Kohlenstoff-, Wasserstoff- und mindestens 2 Sauerstoffatomen je Rest sowie gegebenenfalls auch mindestens einem Si-Atom aufgebaute Reste mit mindestens 6 Kohlenstoffatomen je Rest sind Polyethylenglykole, Polypropylenglykole und Mischpolymerisate aus Ethylenoxyd- und Propylenoxydeinheiten, wobei diese verschiedenen Einheiten in Blöcken vorliegen oder statistisch verteilt sein können. Wenn diese Reste nicht zweiwertig sind, was ohnehin nicht bevorzugt ist, ist das Sauerstoffatom, das sich am anderen Ende als das mit einem Si-Atom verknüpfte Sauerstoffatom befindet, vorzugsweise an einen Alkylrest, wie den Methyl- oder n- oder tert.-Butylrest, gebunden. Es kann aber auch z. B. an einen Acylrest, wie den Acetylrest, oder z. B. an einen Trimethylsilylrest gebunden sein.

Die Herstellung der Organopolysiloxane, in denen zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, kann in bekannter bzw. an sich bekannter Weise beispielsweise durch Kondensation von Si-gebundene Hydroxylgruppen aufweisenden Organopolysiloxanen mit Alkoholen der allgemeinen Formel

$$R'OH,$$

wobei R' die oben angegebene Bedeutung hat, in Gegenwart von sauren oder alkalischen Katalysatoren, wie säurebehandeltem Bentonit oder methanolischem Kaliumhydroxy, erfolgen.

Es kann eine Art von Organopolysiloxan, in dem SiOC-gebundene organische Reste der oben definierten Art vorliegen, zur Herstellung der erfindungsgemäßen Antischaummittel verwendet werden. Die erfindungsgemäßen Antischaummittel können aber auch mindestens zwei verschiedene Arten von Organopolysiloxanen mit solchen SiOC-gebundenen Resten enthalten.

Vorzugsweise sind die Einheiten im Organopolysiloxan, in dem SiOC-gebundene Reste der oben definierten Art vorliegen, mindestens zu 90 % ihrer Anzahl solche der Formel $R_2SiO$ und $R_2(R'O)SiO_{1/2}$, wobei R und R' jeweils die oben dafür angegebene Bedeutung haben. Weiterhin ist bevorzugt, daß derartiges Organopolysiloxan eine durchschnittliche Viskosität von 5 bis 5 000 $m^2 \cdot s^{-1}$ aufweist.

Der Anteil vom Organopolysiloxan, in dem zusätzlich zu den SiC-gebundenen organischen Resten SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, beträgt vorzugsweise 5 bis 70 Gewichtsprozent, bezogen auf das Gesamtgewicht aller in dem jeweiligen Antischaummittel vorhandenen Organopolysiloxane, von Füllstoff, Dispergiermittel und 2,2,4-Trimethyl-1,3-diisobutyryloxypentan.

Der Anteil der Tenside beträgt vorzugsweise 5 bis 50 Gewichtsprozent, bezogen auf das Gesamtgewicht aller in dem jeweiligen Antischaummittel vorhandenen Organopolysiloxane, von Füllstoff, Dispergiermittel und 2,2,4-Trimethyl-1,3-diisobutyryloxypentan. In diesem Zusammenhang sei bemerkt, daß sich die jeweils tatsächlich vorliegenden, in den angegebenen Bereichen liegenden Gewichtsprozentsätze von Organopolysiloxan, Füllstoff, Dispergiermittel und 2,2,4-Trimethyl-1,3-diisobutyryloxypentan, selbstverständlich zu 100 Gewichtsprozent, ergänzen müssen.

Beispiele für bevorzugte Tenside sind Anlagerungsprodukte von Ethylenoxyd an lineare oder verzweigte, 8 bis 20 Kohlenstoffatome je Molekül aufweisende Alkanole oder Arylphenole, wie Isotridecylpolyoxyethylenglykolether, Stearylpolyoxyethylenglykolether, Cetylpolyoxyethylenglykolether, Trimethylnonylpolyoxyethylenglykolether und Nonylphenolpolyoxyethylenglykolether, ferner Anlagerungsprodukte von Ethylenoxyd an lineare oder verzweigte Monocarbonsäuren. Vorzugsweise enthalten derartige Anlagerungsprodukte 2 bis 15 Ethylenoxydeinheiten je Molekül. Beispiele für bevorzugte Tenside sind ebenso Polyoxyethylenglykolsorbitanester oder Polyoxyethylenglykolsorbitolester mit HLB-Werten (vgl. US 4076648, ausgegeben 28. Februar 1978, M. R. Rosen, Union Carbide Corporation, Spalte 4, Zeile 51 bis Spalte 6, Zeile 2) von 8 bis 14, wie Polyoxyethylenglykolsorbitanhexaoleat oder Polyoxyethylensorbitolhexaoleat. Beispiele für bevorzugte Tenside sind schließlich ebenso Fettsäuremono-, di- und -polyglyceride und Natrium- oder Calciumstearoyllactat, Diglycerinstearinsäureester sowie Sorbitanmonostearat.

Die erfindungsgemäßen Antischaummittel können eine Art von Tensid enthalten. Die erfindungsgemäßen Antischaummittel können aber auch Gemische aus mindestens zwei verschiedenen Arten von Tensiden enthalten.

2,2,4-Trimethyl-1,3-diisobutyryloxypentan, das auch als « 2,2,4-Trimethyl-1,3-pentandiol, Diisobutyrat » bezeichnet wird, hat die Formel

$$\begin{array}{l}(CH_3)_2CHCHC(CH_3)_2CH_2OOCH(CH_3)_2 \\ \qquad\qquad\;\; | \\ \qquad\qquad\;\; OOCCH(CH_3)_2\end{array}$$

Der Anteil von 2,2,4-Trimethyl-1,3-diisobutyryloxypentan beträgt vorzugsweise 10 bis 90 Gewichtsprozent, bezogen auf das Gesamtgewicht aller in dem jeweiligen Antischaummittel vorhandenen Organopolysiloxane, von Füllstoff, Dispergiermittel und 2,2,4-Trimethyl-1,3-diisobutyryloxypentan.

Die Füllstoffe in den erfindungsgemäßen Antischaummitteln können die gleichen Füllstoffe sein, die auch in den bisher bekannten Antischaummitteln vorliegen konnten. Beispiele für solche Füllstoffe sind hydrophile und hydrophobe Oxyde von Silicium, Magnesium oder Zink, wobei diese Oxyde vorzugsweise jeweils eine Oberfläche von mindestens 50 $m^2/g$ aufweisen, Salze von Elementen der II. oder III. Gruppe des Periodensystems nach Mendeleeff mit einer Ordnungszahl von 12 bis 30 mit 12 bis 22 Kohlenstoffatome je Molekül aufweisenden, aliphatischen einbasischen Carbonsäuren oder Hydroxycarbonsäuren, wie Calciumstearat oder Calcium-12-hydroxy-stearat, sowie Produkte, die mindestens bei der jeweiligen Anwendungstemperatur des Antischaummittels fest und durch Umsetzung von mindestens einem ein- oder mehrwertigem Isocyanat mit mindestens einer organischen Verbindung, die mindestens ein gegenüber der Isocyanatgruppe reaktionsfähiges Wasserstoffatom enthält, hergestellt worden sind, wie das Produkt der Umsetzung von Naphthylendiisocyanat mit Cyclohexylamin. Vorzugsweise ist die Herstellung der letztgenannten Art von Füllstoffen in Gegenwart von mindestens einem der zur Herstellung der erfindungsgemäßen Antischaummittel eingesetzten Organopolysiloxane erfolgt. Weitere Beispiele für Füllstoffe in den erfindungsgemäßen Antischaummitteln sind Lithiumstearat, Magnesiumsilikat und Magnesiumaluminiumsilikat. Besonders bevorzugt sind pyrogen erzeugtes oder gefälltes Siliciumdioxyd mit einer Oberfläche von mindestens 50 $m^2/g$.

Die erfindungsgemäßen Antischaummittel können eine Art von Füllstoff enthalten. Die erfindungsgemäßen Antischaummittel können aber auch Gemische aus mindestens zwei verschiedenen Arten von Füllstoffen enthalten.

Der Anteil von Füllstoff beträgt vorzugsweise 2 bis 8 Gewichtsprozent, bezogen auf das Gesamtgewicht aller in dem jeweiligen Antischaummittel vorliegenden Organopolysiloxane, von Füllstoff, Dispergiermittel und 2,2,4-Trimethyl-1,3-diisobutyryloxypentan.

Zusätzlich zu Organopolysiloxan, das zusätzlich zu den SiC-gebundenen organischen Resten SiOC-gebundene organische Reste der oben definierten Art enthält, können die erfindungsgemäßen Antischaummittel weitere Organopolysiloxane enthalten. Beispiele für solche weiteren Organopolysiloxane sind durch Trimethylsiloxygruppen endblockierte Dimethylpolysiloxane oder durch Trimethylsiloxygruppen endblockierte Mischpolymerisate aus Dimethylsiloxan- und Diphenylsiloxan- und/oder Phenylmethylsiloxaneinheiten mit einer Viskosität von 35 bis 100 000 $mm^2 \cdot s^{-1}$ bei 25 °C, vorzugsweise 50 bis 50 000 $mm^2 \cdot s^{-1}$ bei 25 °C. Beispiele für solche weiteren Organopolysiloxane sind ebenso bei Raumtemperatur feste, aus $(CH_3)_3SiO_{1/2}$- und $SiO_{4/2}$-Einheiten aufgebaute Organopolysiloxanharze mit 0,25 bis 1,25 $(CH_3)_3SiO_{1/2}$-Einheiten je $SiO_{4/2}$-Einheit, die zweckmäßig in Form ihrer Lösungen in organischem Lösungsmittel mit dem Organopolysiloxan, das zusätzlich zu den SiC-gebundenen organischen Resten SiOC-gebundene organische Reste der oben definierten Art enthält, vermischt werden, wonach dann aus der so erhaltenen Mischung das Lösungsmittel abdestilliert wird. Beispiele für solche weiteren Organopolysiloxane sind weiterhin ebenso eine Viskosität von 100 000 bis 500 000 $mm^2 \cdot s^{-1}$ bei 25 °C aufweisende, aus $CH_3SiO_{3/2}$- und $(CH_3)_2SiO$-Einheiten aufgebaute Organopolysiloxanharze mit 0,8 bis 2 $CH_3SiO_{3/2}$-Einheiten je $(CH_3)_2SiO$-Einheit. Beispiele für zusätzlich vorhandene weitere Organopolysiloxane sind schließlich ebenso aus $CH_3SiO_{3/2}$-, $(CH_3)_3SiO_{1/2}$- und $(CH_3)_2SiO$-Einheiten, z. B. im Molverhältnis von 0,5 : 0,45 : 0,05, wobei die Reihenfolge dieser Zahlen der vorstehend angegebenen Reihenfolge von Siloxaneinheiten entspricht, aufgebaute Organopolysiloxane mit mindestens 2 Gewichtsprozent, bezogen auf ihr Gewicht, an Si-gebundenen Hydroxylgruppen und einer Viskosität von 30 bis 2 000 $mm^2 \cdot s^{-1}$, insbesondere 80 bis 200 $mm^2 \cdot s^{-1}$ bei 25 °C. Solche verhältnismäßig viel Si-gebundene Hydroxylgruppen enthaltenden und niedrigviskosen Organopolysiloxane sind besonders bevorzugt, wenn der Anteil an Organopolysiloxan, das zusätzlich zu den SiC-gebundenen Resten SiOC-gebundene Reste der oben definierten Art, möglichst niedrig gehalten werden soll.

Liegt zusätzlich zu Organopolysiloxan, das zusätzlich zu den SiC-gebundenen organischen Resten SiOC-gebundene organische Reste der oben definierten Art enthält, in den erfindungsgemäßen Antischaummitteln weiteres Organopolysiloxan vor, was bevorzugt ist, so beträgt der Anteil von solchem weiterem Organopolysiloxan vorzugsweise 5 bis 95 Gewichtsprozent, bezogen auf das Gesamtgewicht aller in dem jeweiligen Antischaummittel vorliegenden Organopolysiloxane.

Zusätzlich zu Organopolysiloxan, Füllstoff, Dispergiermittel und 2,2,4-Trimethyl-1,3-diisobutyryloxypentan können die erfindungsgemäßen Antischaummittel weitere Stoffe enthalten, die auch bisher bei der Bearbeitung von Antischaummitteln auf Grundlage von entschäumend wirkendem Organopolysiloxan und Füllstoff verwendet werden konnten. Beispiele für derartige zusätzliche Stoffe sind Mineralöle, pflanzliche Öle, höhere Alkohole, Glykole und Ethylenoxyd-Propylenoxydblockmischpolymere.

Die Herstellung der erfindungsgemäßen Antischaummittel erfolgt vorzugsweise so, daß zunächst Organopolysiloxan und Füllstoff miteinander vermischt und dann die übrigen Bestandteile der so erhaltenen Mischung zugesetzt werden.

Wie schon aus den Worten « in Wasser leicht verteilbare Antischaummittel » hervorgehen sollte, sind diese Mischungen vor ihrer endgültigen Verwendung zur Verhinderung oder Bekämpfung von Schaum zumindest im wesentlichen wasserfrei oder es können aus ihnen sehr leicht wäßrige Emulsionen hergestellt werden.

Die erfindungsgemäßen Antischaummittel können zur Verhinderung oder Bekämpfung von Schaum nicht nur, jedoch insbesondere auf oder in wäßrigen Lösungen eingesetzt werden, z. B. als Zusätze zu Waschmitteln oder einem oder mehr Bestandteilen der Waschmittel, wie Natriumtripolyphosphat oder Natriumperborat oder einem Gemisch aus solchen Natriumverbindungen, weiterhin z. B. bei der Eindampfung von alkalischen Ablaugen der Papierindustrie, der Konzentrierung von Kautschuk-Latices, bei Schneidölemulsionen in der metallverarbeitenden Industrie, in Dispersionsfarben und anderen Anwendungen von Kunstharzdispersionen, in Wasserlacken, in Schmiermitteln, bei der Erdölförderung, Textilfärbung, einschließlich des HT-Verfahrens (englisch : high-temperature dying process), und der Jet-Färbung, Abwasseraufbereitung, Gärprozessen, wie Antibiotika-Herstellung und Erzflotation.

In den folgenden Beispielen wird die Wirksamkeit der Antischaummittel jeweils durch eine Zahl wiedergegeben. Diese Zahl wird als « SRF »-Wert (SRF = Abkürzung für « Schaumresistenzfläche ») bezeichnet und wie folgt bestimmt :

In einem 800 ml-Becherglas mit einem Durchmesser von 9,5 cm und einer Höhe von 13 cm wird zu 200 ml einer 4 gewichtsprozentigen wäßrigen Lösung von Natrium-$C_{14-15}$-Alkylsulfonat die im folgenden im Zusammenhang mit dem jeweiligen SRF-Wert angegebene Menge des zu untersuchenden Antischaummittels gegeben. Die so erhaltene Mischung wird durch 2 gegenläufige Rührer mit mehreren, jeweils in sich geschlossenen Armen bei 1 000 Umdrehungen je Minute 1 Minute so verschäumt, daß keine homogene Flüssigkeit verbleibt. 4 Lichtschranken sind mit einem Abstand von jeweils 1,5 cm voneinander senkrecht entlang der Außenwand des Becherglases angebracht. Eine derartige Vorrichtung

ist in DE-OS 25 51 260 (offengelegt 18. Mai 1977, Wacker-Chemie GmbH) wiedergegeben. Wenn der Schaum in sich zusammenfällt, werden die Lichtschranken eine nach der anderen freigegeben und es wird automatisch mit einem Schreiber ein Diagram aufgezeichnet, das auf der Abszisse die Zeiten (1 cm = 10 Sekunden) wiedergibt, die bis zum Verschwinden vom Schaum bei der obersten, zweithöchsten, dritthöchsten und niedrigsten Lichtschranke verstreichen. 8 cm auf der Ordinate entsprechen der obersten Lichtschranke. Es wird eine Linie erhalten, die fast senkrecht vom Kreuzungspunkt von Abszisse und Ordinate 8 cm hochgeht, dann waagrecht bis zum Zeitpunkt der Freigabe der obersten Lichtschranke verläuft, bei diesem Zeitpunkt senkrecht abfällt, wieder bis zum Zeitpunkt der Freigabe der zweithöchsten Lichtschranke waagrecht verläuft, bei diesem Zeitpunkt senkrecht abfällt u.s.w. In DE-OS 25 51 260 ist auch ein derartiges Diagramm wiedergegeben. Die Fläche, welche die so erhaltene Treppenlinie mit Abszisse und Ordinate bildet, wird vermessen und ergibt den SRF-Wert. Je kleiner dieser Wert ist, um so größer ist die Wirksamkeit des Antischaummittels.

In den folgenden Beispielen beziehen sich alle Angaben von Teilen und Prozentsätzen auf das Gewicht, soweit nichts anderes angegeben ist.

## Beispiel 1

a) Ein Gemisch aus 750 g in den endständigen Einheiten je eine Si-gebundene Hydroxylgruppe aufweisendes Dimethylpolysiloxan mit einer Viskosität von 80 $mm^2 \cdot s^{-1}$ bei 25 °C und 250 g 2-Octyldodekanol, das mit 5 ml 20 %-igem methanolischem Kaliumhydroxyd vermischt wurde, wird 4 Stunden auf 140 °C unter Rühren erwärmt. Nach dem Abkühlen wird das Kaliumhydroxyd mit Dimethyldichlorsilan neutralisiert. Dann werden die geringen Mengen flüchtiger Bestandteile abdestilliert. Es wird ein Öl mit einer Viskosität von 6 $mm^2 \cdot s^{-1}$ bei 25 °C erhalten.

b) Das so erhaltene Öl wird mit 300 g einer 50 %-igen Lösung eines bei Raumtemperatur festen, aus $(CH_3)_3SiO_{1/2}$- und $SiO_{4/2}$-Einheiten aufgebauten Organopolysiloxanharzes mit 0,56 $(CH_3)_3SiO_{1/2}$-Einheiten je $SiO_{4/2}$-Einheit in Toluol vermischt. Dann wird das Lösungsmittel beim Druck der umgebenden Atmosphäre bis etwa 16 mbar (abs.) und 120 °C abdestilliert. Die so erhaltene Organopolysiloxanmischung hat eine Viskosität von 84 $mm^2 \cdot s^{-1}$ bei 25 °C.

c) 94 Teile der gemäß 1b) hergestellten Organopolysiloxanmischung werden mit 3 Teilen hydrophilem gefälltem Siliciumdioxyd mit einer Oberfläche von 90 $m^2/g$ und 3 Teilen hydrophobem, pyrogen erzeugtem Siliciumdioxyd mit einer Oberfläche von 150 $m^2/g$ mittels eines Dreiwalzenstuhls vermischt.

d) 50 Teile der gemäß 1c) hergestellten Mischung aus Organopolysiloxan und Füllstoff werden in eine bei 80 °C befindliche Schmelze aus 6 Teilen Stearylpolyoxyethylenglykolether mit 4 bis 6 Ethylenoxydeinheiten je Molekül, 9 Teilen Polyoxyethylenglykolsorbitolhexaoleat (mit einem HLB-Wert von etwa 11), 17 Teilen Natriumstearoyllactat und 18 Teilen 2,2,4-Trimethyl-1,3-diisobutyryloxypentan eingemischt.

Mit einem Flügelrührer oder auch nur durch Umrühren mit einem Stab läßt sich aus der so erhaltenen Mischung leicht eine feindisperse Emulsion mit gleichmäßig darin verteilten Bestandteilen herstellen. 0,4 g einer Emulsion aus 15 Teilen der gemäß 1d) hergestellten Mischung und 85 Teilen Wasser haben einen SRF-Wert von 700. Diese Emulsion besitzt eine ausgezeichnete Lagerbeständigkeit.

## Beispiel 2

40 Teile einer Mischung, die ihrerseits aus 20 % der gemäß Beispiel 1c) hergestellten Mischung und 80 % eines Gemisches aus 8 Teilen hydrophilem Siliciumdioxyd mit einer Oberfläche von 150 $m^2/g$ und 92 Teilen eines aus 5 Molprozent Dimethylsiloxan-Einheiten, 45 Molprozent Trimethylsiloxan-Einheiten und 5 Molprozent Monomethylsiloxan-Einheiten aufgebauten Organopolysiloxans mit 2 % Si-gebundenen Hydroxylgruppen und einer Viskosität von 150 $mm^2 \cdot s^{-1}$ bei 25 °C besteht, werden zu einer Mischung aus 30 Teilen Isotridecylpolyoxyethylenglykolether mit 5 Ethylenoxydeinheiten je Molekül, 15 Teilen 2,2,4-Trimethyl-1,3-diisobutyryloxypentan und 15 Teilen Weißöl (= Mineralölsorte) gegeben. 0,2 g dieser Mischung haben einen SRF-Wert von 800.

Beim Eingießen in Wasser bildet die Mischung sofort eine feindisperse Emulsion mit gleichmäßig darin verteilten Bestandteilen. Aus einer Emulsion aus 1 Teil der Mischung, deren Herstellung vorstehend beschrieben wurde, und 99 Teilen Wasser scheidet sich auch beim Kochen keine ölige Phase ab.

## Beispiel 3

Ein Gemisch aus 80 % durch Trimethylsiloxygruppen endblockiertem Dimethylpolysiloxan mit einer Viskosität von 100 $mm^2 \cdot s^{-1}$ und 20 % hydrophilem, pyrogen erzeugtem Siliciumdioxyd mit einer Oberfläche von 200 $m^2/g$ wird 8 Stunden auf 200 °C erwärmt und nach dem Abkühlen werden 8 Teile dieses Gemisches mit 2 Teilen eines auf einem Dreiwalzenstuhl hergestellten Gemisches das aus 94 Teilen des gemäß Beispiel 1a) hergestellten Organopolysiloxans mit SiOC-gebundenen Alkylgruppen, 3 Teilen hydrophilem gefälltem Siliciumdioxyd mit einer Oberfläche von 90 $m^2/g$ und 3 Teilen hydrophobem pyrogen erzeugtem Siliciumdioxyd mit einer Oberfläche von 150 $m^2$ besteht, 64 Teilen 2,2,4-Trimethyl-1,3-diisobutyryloxypentan, 20 Teilen Weißöl und 6 Teilen Polyoxyethylenglykolsorbitanhexaoleat mit

einem HLB-Wert von etwa 11 vermischt. 0,2 g dieser Mischung haben einen SRF-Wert von 500.

Mit einem Flügelrührer oder auch nur durch Rühren mit einem Stab läßt sich aus der so erhaltenen Mischung leicht eine feindisperse Emulsion mit gleichmäßig darin verteilten Bestandteilen herstellen.

## Beispiel 4

a) Ein Gemisch aus 750 g eines in den endständigen Einheiten je eine Si-gebundene Hydroxylgruppe aufweisenden Dimethylpolysiloxans mit einer Viskosität von 100 $mm^2 \cdot s^{-1}$ bei 25 °C, 250 g Polypropylenglykol mit einem Molekulargewicht von etwa 2 000 und 30 g säurebehandeltem Bentonit wird 5 Stunden unter Rühren auf 150 °C erwärmt. Nach dem Abtrennen vom Feststoff werden die flüchtigen Bestandteile abdestilliert.

b) Das so erhaltene Öl wird bei der in Beispiel 1b) beschriebenen Arbeitsweise anstelle des gemäß Beispiel 1a) hergestellten Organopolysiloxans mit SiOC-gebundenen Alkylgruppen eingesetzt. Die so erhaltene Organopolysiloxanmischung hat eine Viskosität von 150 $mm^2 \cdot s^{-1}$ bei 25 °C.

c) 20 Teile der gemäß 4b) hergestellten Organopolysiloxanmischung werden mit 20 Teilen einer Mischung aus 92 % durch Trimethylsiloxygruppen endblockiertem Dimethylpolysiloxan mit einer Viskosität von 5 000 $mm^2 \cdot s^{-1}$ bei 25 °C, 2 % Calciumstearat, 2 % Calcium-12-hydroxystearat und 4 % hydrophilem, pyrogen erzeugtem Siliciumdioxyd mit einer Oberfläche von 130 $m^2/g$ mittels eines Dreiwalzenstuhls vermischt.

d) Nach Verdünnen mit 20 Teilen Sojaöl wird die gemäß 4c) hergestellte Mischung aus Organopolysiloxan und Füllstoff in eine bei 65 °C befindliche Mischung aus 5 Teilen Anlagerungsprodukt von Ethylenoxyd an Stearinsäure mit 4 Ethylenoxydeinheiten je Molekül und 7 Teilen Natriumstearoyllactat eingemischt. Zu dieser Mischung werden zunächst 10 Teile Polyoxyethylensorbitolhexaoleat (mit einem HLB-Wert von etwa 11) und dann unter Rühren 15 Teilen aliphatisches, von Mehrfachbindungen freies Mineralöl mit einer Viskosität von 320 $mm^2 \cdot s^{-1}$ bei 20 °C und 13 Teile 2,2,4-Trimethyl-1,3-diisobutyryloxypentan eingemischt. 0,2 g der so erhaltenen Mischung haben einen SRF-Wert von 350.

Die Mischung läßt sich leicht in Wasser verteilen.

## Beispiel 5

a) Ein Gemisch aus 500 g eines in den endständigen Einheiten je eine Si-gebundene Hydroxylgruppe aufweisenden Dimethylpolysiloxans mit einer Viskosität von 80 $mm^2 \cdot s^{-1}$ bei 25 °C und 500 g Polypropylenglykolmonomethylether mit einem Molekulargewicht von 2 000, das mit 5 ml 20 %-igem methanolischem Kaliumhydroxyd vermischt wurde, wird 4 Stunden auf 140 °C unter Rühren erwärmt. Das so erhaltene Öl hat eine Viskosität von 170 $mm^2 \cdot s^{-1}$ bei 25 °C.

b) 50 Teile des gemäß 5a) hergestellten Öls werden mit 5 Teilen hydrophobem, pyrogen erzeugtem Siliciumdioxyd mit einer Oberfläche von 200 $m^2/g$ mittels eines Dreiwalzenstuhls vermischt. Diese Mischung wird mit einer Mischung aus 10 Teilen des in Beispiel 2 näher beschriebenen Organopolysiloxans aus Dimethylsiloxan-, Trimethylsiloxan- und Monomethylsiloxan-Einheiten und 2 Teilen Lithiumstearat vermischt.

c) In die gemäß 5b) hergestellte Mischung aus Organopolysiloxan und Füllstoff werden mittels eines im Frequenzbereich von Schall bis Ultraschall betreibbaren Mischgerätes (erhältlich unter dem registrierten Warenzeichen « Ultra Turrax ») zunächst 10 Teile Isotridecylpolyoxyethylenglykolether mit 5 Ethylenoxydeinheiten je Molekül und dann 23 Teilen 2,2,4-Trimethyl-1,3-diisobutyryloxypentan eingemischt. 0,2 g der so erhaltenen Mischung haben einen SRF-Wert von etwa 300.

Die Mischung bildet beim Eingießen in Wasser sofort eine feindisperse Emulsion.

## Beispiel 6

a) Bei der in Beispiel 5a) angegebenen Arbeitsweise werden die 500 g Polypropylenglykolmonomethylether durch 500 g Polypropylenglykolmono-n-butylether mit einem Molekulargewicht von 700 ersetzt.

b) Das so erhaltene Öl wird bei der in Beispiel 1b) beschriebenen Arbeitsweise anstelle des gemäß Beispiel 1a) hergestellten Organopolysiloxans mit SiOC-gebundenen Alkylgruppen eingesetzt. Die so erhaltene Organopolysiloxanmischung hat eine Viskosität von 200 $mm^2 \cdot s^{-1}$ bei 25 °C.

c) 15 Teile der gemäß 6b) hergestellten Organopolysiloxanmischung werden zunächst mit 5 Teilen eines durch Trimethylsiloxygruppen endblockierten Diorganopolysiloxans aus 90 Molprozent Dimethylsiloxaneinheiten und 10 Molprozent Diphenylsiloxaneinheiten mit einer Viskosität von 300 $mm^2 \cdot s^{-1}$ bei 25 °C und dann mit 25 Teilen 2,2,4-Trimethyl-1,3-diisobutyryloxypentan vermischt. Nach Verdünnen mit 17 Teilen naphtenischen Mineralöls mit einer Viskosität von 70 $mm^2 \cdot s^{-1}$ bei 20 °C werden in diese Mischung mittels des im Frequenzbereich von Schall bis Ultraschall betreibbaren Mischgerätes 8 Teile eines Gemisches aus gleichen Gewichtsteilen hydrophobem, pyrogen erzeugtem Siliciumdioxyd mit einer Oberfläche von 180 $m^2/g$ und hydrophobem, pyrogen erzeugtem Siliciumdioxyd mit einer Oberfläche von 300 $m^2/g$ eingemischt. Die so erhaltene Mischung wird in ein auf 45 °C erwärmtes Gemisch aus 10 Teilen Isotridecylpolyoxyethylenglykolether mit 5 Ethylenoxydeinheiten je Molekül und

15 Teilen Polyoxyethylensorbitolhexaoleat eingemischt. 0,2 g der so erhaltenen Mischung haben einen SRF-Wert von etwa 500.

Die Mischung läßt sich leicht in Wasser verteilen.

**Patentansprüche**

1. In Wasser leicht verteilbare Antischaummittel auf Grundlage von Organopolysiloxan, Füllstoff und Dispergiermittel, dadurch gekennzeichnet, daß in mindestens einem Teil des Organopolysiloxans zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, die Dispergiermittel mindestens zum Teil Tenside sind und diese Antischaummittel zusätzlich zu Organopolysiloxan, Füllstoff und Dispergiermittel als mindestens einen weiteren Stoff 2,2,4-Trimethyl-1,3-diisobutyryloxypentan enthalten.

2. Antischaummittel nach Anspruch 1, dadurch gekennzeichnet, daß sie 2,2,4-Trimethyl-1,3-diisobutyryloxypentan in Mengen von 10 bis 90 Gewichtsprozent, bezogen auf das Gesamtgewicht von Organopolysiloxan, Füllstoff, Dispergiermittel und 2,2,4-Trimethyl-1,3-diisobutyryloxypentan, enthalten.

**Claims**

1. Anti-foam agents that are readily dispersible in water and are based on organopolysiloxane(s), filler(s) and dispersing agent(s), characterised in that there are present in at least part of the organopolysiloxane, in addition to the SiC-bonded organic radicals, identical or different, SiOC-bonded radicals composed of carbon and hydrogen atoms and/or of carbon, hydrogen and at least two oxygen atoms per radical and optionally also at least one Si atom and having in each case at least six carbon atoms per radical, at least some of the dispersing agents are surfactants, and these anti-foam agents contain, in addition to the organopolysiloxane(s), filler(s) and dispersing agent(s), 2,2,4-trimethyl-1,3-diisobutyryloxypentane as at least one further substance.

2. Anti-foam agents according to claim 1, characterized in that they contain 2,2,4-trimethyl-1,3-diisobutyryloxypentane in an amount of from 10 to 90 per cent by weight, calculated on the total weight of the organopolysiloxane(s), filler(s), dispersing agent(s) and 2,2,4-trimethyl-1,3-diisobutyryloxypentane.

**Revendications**

1. Antimousses facilement dispersables dans l'eau, à base de polyorganosiloxane, d'une charge et d'un dispersant, caractérisés en ce que, dans au moins 1 partie du polyorganosiloxane, en plus de restes organiques à liaison de type SiC, il y a des restes identiques ou différents, à liaison de type SiOC, formés d'atomes de carbone et d'atomes d'hydrogène et/ou d'atomes de carbone, d'atomes d'hydrogène et d'au moins 2 atomes d'oxygène par reste ainsi qu'éventuellement aussi d'au moins 1 atome de Si et comportant au moins à chaque fois 6 atomes de carbone par reste, en ce que les dispersants sont au moins en partie des tensio-actifs et en ce que cet antimousse contient, en plus du polyorganosiloxane, de la charge et de l'agent de dispersion du triméthyl-2,2,4-diisobutyryloxy-1,3 pentane à titre d'au moins une autre substance présente.

2. Antimousses selon la revendication 1, caractérisés en ce qu'ils contiennent le triméthyl-2,2,4 diisobutyryloxy-1,3 pentane en des quantités de 10 à 90 % en poids, par rapport au poids total du polyorganosiloxane, de la charge, du dispersant et du triméthyl-2,2,4 diisobutyryloxy-1,3 pentane.